# EUROPEAN PATENT APPLICATION

(11) **EP 2 894 545 A1**
(43) Date of publication of application: **15.07.2015**
(21) Application number: 15150381.0
(22) Date of filing: 07.01.2015
(51) Int. Cl.: G06F 3/01, G06F 3/0488, G06F 3/0484, G06F 3/16, G02B 27/01

(54) **Method and apparatus for processing inputs in an electronic device**

(30) Priority: 10.01.2014 KR 20140003229
(71) Applicant: Samsung Electronics Co., Ltd, Gyeonggi-do 443-742 (KR)
(72) Inventor: Lee, Seungcheol, 443-742 Gyeonggi-do (KR); Yoon, Sungho, 443-742 Gyeonggi-do (KR); Jeong, Jinhong, 443-742 Gyeonggi-do (KR); Park, Taegun, 443-742 Gyeonggi-do (KR); Lee, Kihuk, 443-742 Gyeonggi-do (KR); Kim, Soohyung, 443-742 Gyeonggi-do (KR); Kim, Hyunsoo, 443-742 Gyeonggi-do (KR)
(74) Representative: Jenkins, Richard Gavin

(57) **Abstract**

Disclosed is a method and apparatus for processing inputs by using a viewing point. The method includes recognizing a viewing point that a user is viewing on a display area functionally connected to an electronic device, obtaining an input on the display area, and determining whether to execute a function corresponding to the input, based on at least one of attributes of the input or the viewing point.

## Description

### BACKGROUND OF THE INVENTION

### 1. Field of the Invention

The present invention relates generally to a method and apparatus for processing inputs by using a viewing point of a user, and an electronic device adapted to the method.

### 2. Description of the Related Art

Recent electronic devices have employed a touch-based input technology for their input systems, to enhance input convenience. Electronic devices have been developed to be small in size or thin in thickness. Touch-based input technologies are implemented in such a manner that a single system has both a display function and an input function, to conform with a trend of developing electronic devices to be small in size and thin in thickness. The touch-based systems enable users to perform input operations while simultaneously viewing what is displayed. However, conventional touch-based input technologies recognize an input on the display at which a user's touch occurred and perform the corresponding function or application, which inconveniently does not involve the viewing by the user.

In recent years, touch screens have been employed by most electronic devices and are used in variety of fields. In particular, as display areas of touch screens are getting bigger, they receive a user's unintended touch inputs and this causes the electronic device to malfunction. For example, when an electronic device is operated in an environment where multiple windows are used on a screen, the user may unintentionally make a touch on a second window while handling a first window. In that case, the electronic device may malfunction. According to the performance or settings of a touch screen, the electronic device can receive a user's input that does not contact the surface of the touch screen, hovering above the surface. Electronic devices with touch screens have been developed to receive inputs in more various methods. Meanwhile, they are also likely to receive a user's unintended inputs. When electronic devices are designed to receive inputs from a pen tool, they may detect a user's untended touch input that is applied to the touch screen by part of the user's body, e.g., the palm, etc.

### SUMMARY OF THE INVENTION

The present invention has been made to address the above problems and disadvantages occurring in the prior art, and to provide at least the advantages set forth below.

Accordingly, an aspect of the present invention is to provide an apparatus for processing inputs by using a viewing point of a user.

Another aspect of the present invention is to provide a method for processing inputs by using a viewing point of a user.

In accordance with an embodiment of the present invention, a method for processing a user input includes recognizing a viewing point that a user is viewing on a display area functionally connected to an electronic device, obtaining an input on the display area, and determining whether to execute a function corresponding to the input, based on at least one of attributes of the input or the viewing point.

In accordance with another embodiment of the present invention, an electronic device includes a recognition unit that recognizes a viewing point that a user is viewing on a display area functionally connected to an electronic device, an input unit that obtains an input on the display area, and a controller that determines whether to execute a function corresponding to the input, based on at least one of attributes of the input or the viewing point.

In accordance with another embodiment of the present invention, disclosed is a non-transitory computer-readable recording medium having recorded thereon a program for executing a method for processing a user's inputs, the method comprising recognizing a viewing point that a user is viewing on a display area functionally connected to an electronic device, obtaining an input on the display area, and determining whether to execute a function corresponding to the input, based on at least one of attributes of the input or the viewing point.

### BRIEF DESCRIPTION OF THE DRAWINGS

The features and advantages of the present invention will be more apparent from the following detailed description in conjunction with the accompanying drawings, in which:
FIG. 1 illustrates a method for processing inputs according to an embodiment of the present invention;
FIG. 2 illustrates a method for dividing a display area into sub-areas on the display of an electronic device according to an embodiment of the present invention;
FIG. 3 illustrates a method for dividing a window region into sub-regions on the display of an electronic device according to an embodiment of the present invention;
FIG. 4 illustrates a method that determines whether to execute a function corresponding to an input in an electronic device according to an embodiment of the present invention;
FIG. 5 illustrates a method that determines whether to execute a function corresponding to an input in an electronic device according to another embodiment of the present invention;
FIGs. 6(a) and 6(b) illustrate sub-regions in a gesture input area according to an embodiment of the present invention; and
FIG. 7 illustrates a schematic block diagram of an electronic device according to an embodiment of the present invention.

### DETAILED DESCRIPTION OF EMBODIMENTS OF THE PRESENT INVENTION

Hereinafter, embodiments of the present invention are described in detail with reference to the accompanying drawings. In the drawings, the same or similar elements are denoted by the same reference numerals even though they are depicted in different drawings. In the following description, a detailed description of known functions and configurations incorporated herein will be omitted for the sake of clarity and conciseness.

The electronic device according to embodiments of the present invention includes, but is not limited to, a device with a communication function. For example, the electronic device corresponds to a combination of at least one of the following: a smartphone, a tablet Personal Computer (PC), a mobile phone, a video phone, an e-book reader, a desktop PC, a laptop PC, a netbook computer, a Personal Digital Assistant (PDA), a Portable Multimedia Player (PMP), a digital audio player such as an MP3 player, a mobile medical device, a camera, or a wearable device. Examples of the wearable device are a Head-Mounted-Device (HMD)such as electronic eyeglasses, electronic clothing, an electronic bracelet, an electronic necklace, an appcessory, an electronic tattoo, and a smart watch.

The electronic device according to embodiments of the present invention includes, but is not limited to, smart home appliances with a communication function. Examples of the smart home appliances are a television (TV), a Digital Video Disk (DVD) player, an audio system, a refrigerator, an air-conditioner, a cleaning device, an oven, a microwave oven, a washing machine, an air cleaner, a set-top box, a TV box such as Samsung HomeSyncTM, Apple TVTM, or Google TVTM, a game console, an electronic dictionary, an electronic key, a camcorder, and an electronic album.

The electronic device according to the embodiments of the present invention includes at least one of the following: medical devices (e.g., Magnetic Resonance Angiography (MRA), Magnetic Resonance Imaging (MRI), Computed Tomography (CT), a scanning machine, an ultrasonic scanning device, etc.), a navigation device, a Global Positioning System (GPS) receiver, an Event Data Recorder (EDR), a Flight Data Recorder (FDR), a vehicle infotainment device, an electronic equipment for ships (e.g., navigation equipment, gyrocompass, etc.), avionics, a security device, an industrial or home robot, etc.

The electronic device according to the embodiments of the present invention includes at least one of the following: furniture or a portion of a building/structure, an electronic board, an electronic signature receiving device, a projector, various measuring instruments (e.g., a water meter, an electric meter, a gas meter and a wave meter), etc., which are equipped with a heart rate measuring function, respectively. The electronic device according to the embodiments of the present invention may also include a combination of the devices listed above. In addition, the electronic device according to the embodiments of the present invention may be a flexible device. It is obvious to those skilled in the art that the electronic device according to the embodiments of the present invention is not limited to the aforementioned devices.

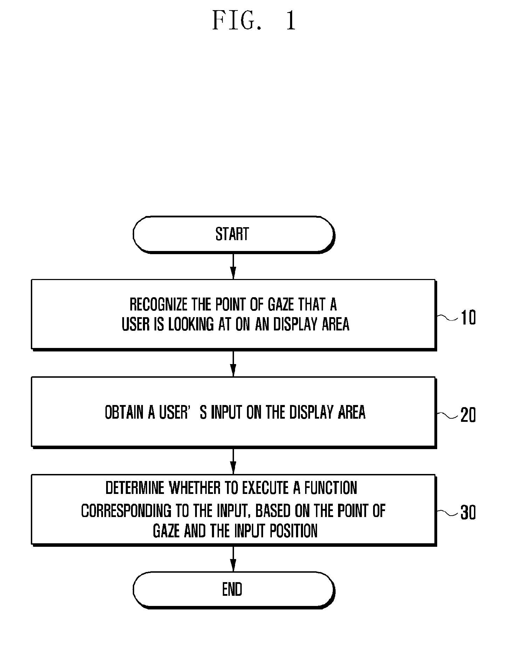

FIG. 1 illustrates a method for processing inputs according to an embodiment of the present invention. The method may be executed in an electronic device.

Referring to FIG. 1, the electronic device may recognize a viewing point that a user is viewing on a display area in step 10. The electronic device may recognize a viewing point that a user is viewing by using a sensor or a camera. For example, the electronic device may recognize a viewing point of a user by combining the direction in which the user's eyes are looking with the direction of the user's face. The electronic device may also recognize a viewing point of a user by recognizing at least one of a user's eyes, nose, mouth and ears, and by combining positions of the recognized user's eyes, nose, mouth and ears with each other.

For example, when the electronic device is placed in an environment where the camera cannot detect a viewing point of the user, the electronic device can further detect the direction of the user's face since the face's direction can be obtained by using at least one of the eyes, nose, mouth, and ears of the user. In addition, the electronic device can recognize the viewing point by using a wearable device, such as an HMD.

In an embodiment of the present invention, the electronic device may distinctively display a display area corresponding to the recognized viewing point. For example, if the display area is divided into a number of subareas, the electronic device displays the subarea where the viewing point is included, differing from the subareas where the viewing point is not included, thereby allowing the user to intuitively recognize the subarea corresponding to the user's viewing point, or in other words, the point of gaze of the user.

The display area refers to a screen area of the display area. In an embodiment of the present invention, the electronic device divides the display area into a number of window regions according to the attributes of applications or the number of applications. The display area is divided into two or more areas, which are subareas or window regions. Window regions may be operated independently, individually, or in cooperation with each other.

For example, when brightness is controlled in a first window region, a second window region is set in such a manner that its brightness is not controlled or is controlled in the same manner as the first window region. In addition, when audio volume is controlled in a first window region, a second window region is set in such a manner that its audio volume is not controlled or is controlled in the same manner as the first window region.

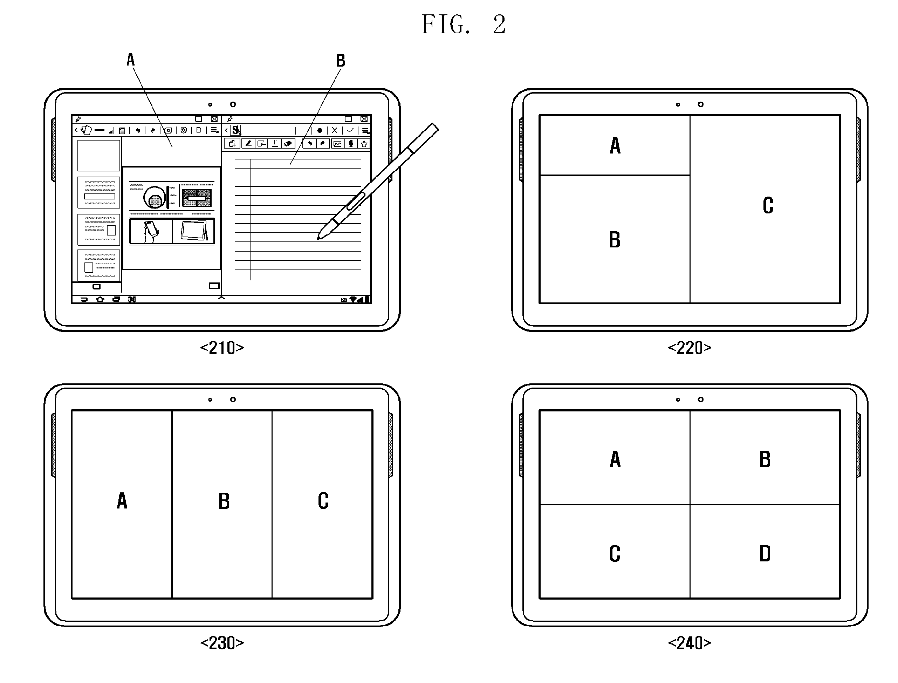

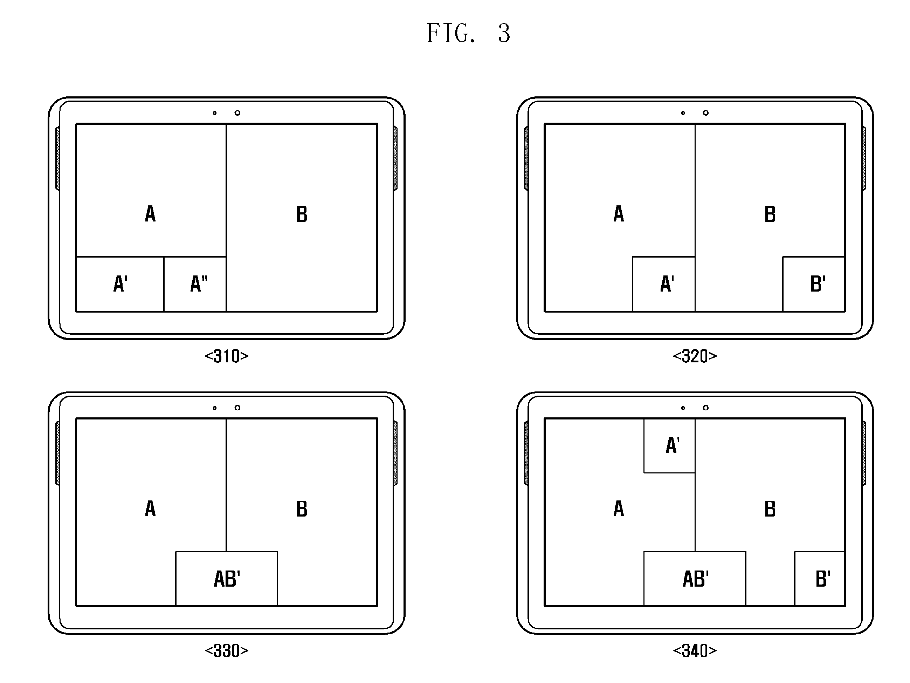

In an embodiment of the present invention, at least one of a number, location, shape and size of window region may be variable. A more detailed description regarding window region will be provided in reference to FIGs. 2 and 3.

Referring back to FIG. 1, the electronic device obtains a user's input applied to the display area in step 20. The user's input may be a touch action to or a hovering action above the screen of the electronic device. The electronic device obtains an input from the screen to which the user applies a part of the body, such as a hand or foot, or from a voice or a pen, for example. In an embodiment of the present invention, the electronic device includes a touch panel having an integrated display area (display unit) and input acquisition area (input unit).

The electronic device obtains attribute information regarding the obtained input. The attribute information is related to a position at which the input is applied or the input tool. For example, the attribute information depends on types of input modes, such as the user's hand or a pen. In an embodiment of the present invention, the electronic device sets a specified range according to attribute information regarding the input. That is, the electronic device sets a specified range to different values according to attribute information regarding the input, such as a pen or a hand. The specified range may be a threshold, a reference value or a range of a reference value that is used to determine whether the input is an intended input. The specified range may be stored in a storage area, such as a memory.

The electronic device sets a specified range based on a variable or the rate of change in time of the variable. The variable includes at least one of the contact area of the input, the input position, the number of inputs, a period of time for input generation, the velocity of the input, relationship between the adjacent inputs that are successively created, and a path between the inputs.

When the input is included in the specified range, the electronic device determines that the input is effective. The electronic device adjusts the specified ranges in window regions according to a period of time during which the viewing point is focused on, a time difference between periods of time during which a previous viewing point and a current viewing point are focused on, respectively, a period of time during which a continuous viewing point is focused on, an attribute of an application, and an attribute of an input.

A specified range for the viewing point is set based on a surface area of a touch input to the screen, such as over 4 mm2. A specified range for position is set based on a range of distance between objects that are likely to be input or expected to be input, such as less than 5 mm. A specified range for a number of touch actions is set to a condition so that at least two touch actions need to occur. A specified range for time of input is set so that the duration of an input event needs to be over 0.05 sec, for example. A specified range for velocity is set so that input actions need to move less than 10 cm/s, for example. When the electronic device detects various inputs satisfying these specified ranges, the electronic device determines that the corresponding inputs are effective.

For example, when a user touches the touch panel with one finger, the velocity of the finger approaching the touch panel may depend on a user's intentions. For example, a user may input a touch at a velocity greater than a user's intended velocity. A user may make a strong or weak touch on the touch panel according to his/her ability. A touch may be applied to the touch panel in a large or small surface area according to a user's finger size. Touches may also be applied to the touch panel at different velocities. Touch events may occur at different positions and with different surface areas according to whether a user intentionally or unintentionally makes a touch.

For example, when a user touches the touch panel with two fingers, one finger may first make a touch and the other may a touch in a period of time after the first touch occurred. The surface areas, positions, and velocities of the inputs by the two fingers may differ from one another. In order to perform a zooming in/out action, the two fingers may vary in position.

In an embodiment of the present invention, a number of conditions may be considered to conclude that an input is effective. For example, when setting a specified range to a larger value, although an input is created at a relatively large value indicating that a touch is strongly pressed, an effective input is not determined if the value is less than the set range. However, when setting a specified range to a smaller value, although an input is created at a relatively small value indicating that a touch is weakly pressed, an effective input is determined if the value is greater than the set range.

As an example of when a specified range is set to a relatively large value, if the duration of maintaining an input is greater than or equal to 0.1 sec, the input is concluded as a user's intended input. As an example of when a specified range is set to a relatively small value, if the duration of maintaining an input is greater than or equal to 0.1 sec, the input is concluded as a user's intended input.

In an embodiment of the present invention, in order to set a specified range to a large value, conditions that are variable must be satisfied to be accepted as effective inputs, and may be lowered or different weights may be applied to variables. If the electronic device receives an input out of a specified range, it is determined that the input is not a user's intended input. If unintended inputs successively or separately occur on a window region, the specified range may be set to the larger value.

A specified range may also be adjusted by a use pattern of a pen. For example, since the probability of touch inputs occurring on a first window region in use of a pen is relatively low, the electronic device sets the first window region so that the specified range for touch input is a relatively large value. The electronic device sets a window region where an application or graphic user interface normally operating with a pen is executed so that the specified range for touch input is a relatively large value. In an embodiment of the present invention, when an input is created by a pen, the electronic device sets a specified range for touch input to a relatively large value and a specified range for pen to a small value.

Referring back to FIG. 1, the electronic device determines whether to execute a function corresponding to the input, based on the viewing point or the position of the input in step 30. When the electronic device ascertains that the viewing point and the position of the input are in the same display area, the electronic device executes a function corresponding to the input. For example, when the electronic device ascertains that the viewing point corresponds to the position of the input, the electronic device determines that the input is an effective input and executes a function corresponding to the input. Similarly, when the electronic device ascertains that the position of the input is included in a window region where the viewing point is recognized, the electronic device executes a function corresponding to the input.

When the electronic device ascertains that the viewing point and the position of the input are within a reference distance, the electronic device executes a function corresponding to the input according to whether the attribute of the input is within a specified range. For example, if the viewing point and the position of the input are not in the same area but are within a reference distance, the electronic device executes a function corresponding to the input according to the level of effectiveness of the input.

The reference distance may be set according to a correlation between a viewing point and a position of an input, the screen size of the electronic device, and the size or number of display areas. Similarly, when the electronic device ascertains that the position of the input is included in a window region adjacent to a window region where the viewing point is recognized, the electronic device executes a function corresponding to the input. Window region adjacent to a window region where the viewing point is recognized may be one of window regions located at the top, bottom, left and right of window region where the viewing point is recognized.

The electronic device sets a specified range of a first window region corresponding to the viewing point less than that of a second window region that does not correspond to the viewing. Although the viewing point of a user is not in the second window region but the attribute of the input is within a specified range (e.g., the input in a relatively high level of effectiveness), the electronic device executes a function corresponding to the input. For example, assuming that in a first specified range, a window region where the viewing point is recognized is identical to a window where the input (e.g., a surface area of 3 mm2) is detected, and in a second specified range, a window region where the viewing point is recognized is adjacent to a window where the input is detected.

In this case, the electronic device sets the first and second specified ranges to be different from each other. For example, when the electronic device ascertains that a viewing point and an input are included in the same area, the electronic device sets a specified range to a relatively small value, such as a surface area greater than or equal to 2 mm2, and determines that the input is an effective input. When the electronic device ascertains that a viewing point and an input included in the adjacent areas respectively are adjacent, the electronic device sets a specified range to a relatively large value, such as a surface area greater than or equal to 5 mm2, and determines that the input is an ineffective or unintended input.

In another embodiment of the present invention, the electronic device sets multiple window regions to have different specified ranges, respectively, and stores the specified ranges in a storage area. The electronic device sets window regions to have different specified ranges according to periods of time during which a viewing point of a user is being focused on, in window regions.

FIG. 2 illustrates a method for dividing a display area into subareas on the display of an electronic device according to an embodiment of the present invention.

When two applications are simultaneously executed on a display area in the electronic device, the display area is divided into two window regions A and B as shown in screen 210 of FIG. 2. When three applications are simultaneously executed in the electronic device, the display area is divided into three window regions A, B and C as shown in screens 220 and 230 of FIG. 2. However, window regions may be located at any desired positions.

More specifically, in order to divide the display area into three window regions, as shown in screen 220 of FIG. 2, the display area is first divided into two window regions A and C and then window region A is further divided into two window regions A and B, thereby creating three window regions A, B, and C. Similarly, as shown in screen 230 of FIG. 2, the display area is equally divided into three window regions A, B and C. In addition, when four applications are simultaneously executed in the electronic device, the display area is divided into four window regions A, B, C and D as shown in screen 240 of FIG. 2. In an embodiment of the present invention, the electronic device executes one application and divides the display area into a number of sub-areas for the application.

FIG. 3 illustrates a method for dividing a window region into sub-regions the display of an electronic device according to an embodiment of the present invention.

The electronic device divides a window region for an application A into a number of sub-regions. Since an application is executed on a window region, the electronic device divides the display area into two window regions, i.e., first window region A and second window region B. The electronic device further divides the first window region A to include two sub-regions A' and A" as shown in screen 310 of FIG. 3.

In an embodiment of the present invention, the electronic device divides the display area into two window regions A and B, creates a sub-region A1 in the first window region A, and creates a sub-region B' in the second window region B as shown in screen 320 of FIG. 3. In an embodiment of the present invention, the electronic device divides window regions so that part of at least two window regions forms one or more sub-regions.

In an embodiment of the present invention, the electronic device divides the display area into two window regions A and B, and then reduces the two window regions so that part of the two window regions creates a sub-region AB' as shown in screen 330 of FIG. 3. The electronic device also divides the display area into two window regions A and B, and then creates sub-regions A' and B' in the first window region A and second window region B, respectively, and creates a sub-region AB' to include part of the first window region A and second window region B as shown in screen 340 of FIG. 3.

In an embodiment of the present invention, although the electronic device executes one application, the electronic device divides window region into sub-regions by using functional components such as a notice window or a toolbar. For example, a window region may be divided by any components such as functional, configuration, aesthetic, access, operational, or content components.

In an embodiment of the present invention, the electronic device sets at least one of the number, position, shape, and size of window regions according to at least one attribute of contents, applications, pop-ups, functional windows, and favorites. For example, the electronic device sets the number of window regions according to an attribute of application. If the attribute of application is a photograph editing, the electronic device divides the display area into two window regions, so that an application for showing stored photographs can be executed on the first window region and an application for editing photographs can be executed on the second window region.

When webpages are executed, the electronic device divides the display area into two window regions, so that the favorite can be executed on the first window region and webpages can be executed on the second window region.

Although embodiments of the present invention are implemented in such a manner that window regions are shaped as rectangles, it should be understood that modifications to various shapes such as triangles, circles, lenticular shapes, and a polygon with n sides and n vertices could be made.

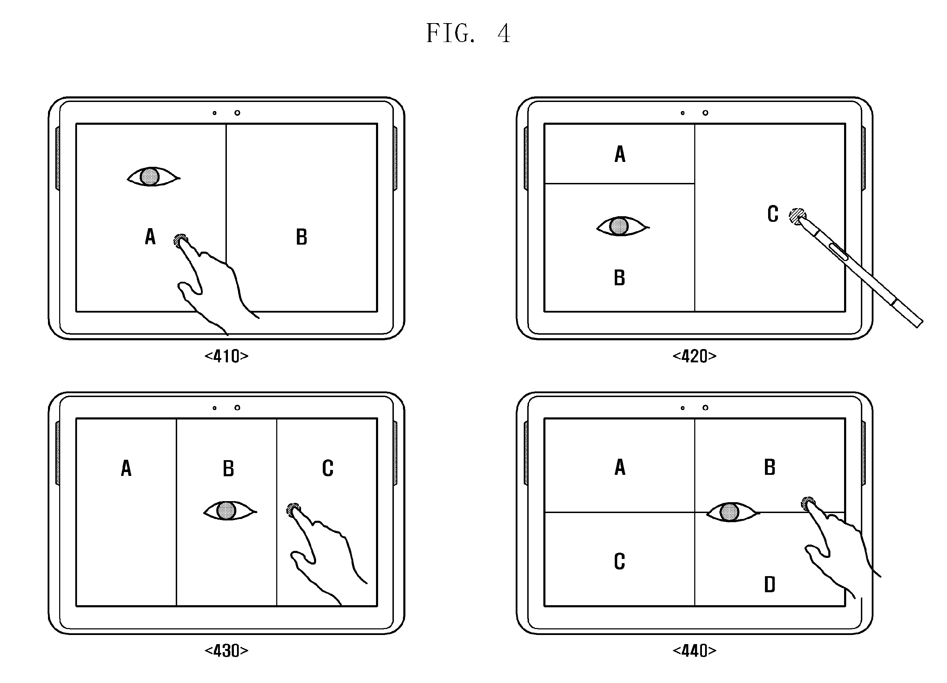

FIG. 4 illustrates a method for determining whether to execute a function corresponding to an input in an electronic device according to an embodiment of the present invention.

As shown in screen 410 of FIG. 4, the electronic device divides a display area into two window regions A and B. When the electronic device obtains an input and recognizes a viewing point of a user on window region A, the electronic device determines that the obtained input is an effective input. In that case, the electronic device may execute a function corresponding to the input or may execute an application on window region A where the input is obtained.

As shown in screen 420 of FIG. 4, the electronic device divides a display area into three window regions A, B and C. When the electronic device obtains an input on window region C adjacent to window region B where a viewing point of a user is recognized, it determines whether the attribute of the input is within a specified range.

That is, when window region C where the input is obtained differs from window region B where the viewing point of a user is recognized, the electronic device determines whether to execute a function corresponding to the input according to the attribute of the input. It will be understood that window region C, adjacent to window region B where the viewing point is recognized, may be one of window regions adjacent to the top, bottom, left and right sides of window region B where the viewing point is recognized. Therefore, when the electronic device ascertains that the attribute of the input is a pen, the electronic device identifies a specific range corresponding to a pen. When the electronic device ascertains that the attribute of the input is within (or corresponds to) the specified range, the electronic device determines that the input is an effective input.

As shown in screen 430 of FIG. 4, when the electronic device obtains an input on window region C adjacent to window region B where a viewing point of a user is recognized and ascertains that the attribute of the input is a 'hand,' the electronic device identifies a specific range corresponding to a hand. When the electronic device ascertains that the attribute of the hand input is not within the specific range, the electronic device determines that the input is not an effective input.

As shown in screen 440 of FIG. 4, the electronic device divides a display area into four window regions A, B, C and D. When the electronic device obtains an input on window region B and recognizes a viewing point of a user on the boundary between window region B and window region D adjacent thereto, the electronic device determines whether the attribute of the input is within a specified range. When the electronic device ascertains that the attribute of the input is a 'hand,' the electronic device identifies a specific range corresponding to a hand. When the electronic device ascertains that the attribute of the hand input is not within the specific range, the electronic device determines that the input is not an effective input. In that case, the electronic device does not execute a function corresponding to the hand input.

A viewing point that a user is focusing on may be included in one window region or a group of window regions. For example, since a user's eyes generally move freely on the screen, the viewing point may be located in one or more window regions. During the movement of the eyes, the electronic device detects the path and focusing time on one or more window regions, and sets the number of window regions that the user is focusing on to one window region when a viewing point is located in one window region, or to one group when a viewing point is located in a number of window regions.

While a viewing point of a user is focused on a window region to which the user intends to apply an input, the electronic device may receive and process a user's input. That is, the electronic device may distinctively display a window region that a viewing point of the user is focused on from the other window regions, so that window region is easily recognized by the user.

In an embodiment of the present invention, the direction in which a user's eyes are looking (a recognized viewing point of a user) may differ from that of a user's face. For example, while the user's face is facing on the left window region, the user's eyes may move between the left and right window regions, such as when a user writes something on the right window region while viewing the contents on the left window region. In that case, the electronic device sets window regions of the recognized eyes or face with different specified ranges, respectively.

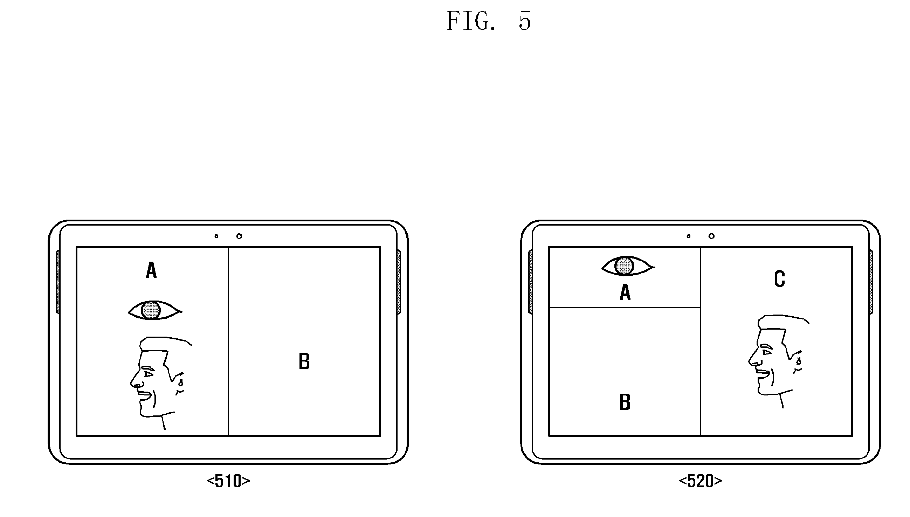

FIG. 5 illustrates a method for determining whether to execute a function corresponding to an input in an electronic device according to another embodiment of the present invention.

As shown in screen 510 of FIG. 5, the electronic device divides a display area into two window regions A and B. When the electronic device recognizes a user's eye and face on the same window region such as window region A, the electronic device determines that an effective input has been made. In that case, the electronic device executes a function corresponding to the input.

As shown in screen 520 of FIG. 5, the electronic device divides a display area into three window regions A, B and C. When the electronic device recognizes the eye and the face of a user on different window regions, such as the eye on window region A and the face on window region C, it is determined that an input is not an effective input. In that case, the electronic device ignores the obtained input or does not execute a function corresponding to the input.

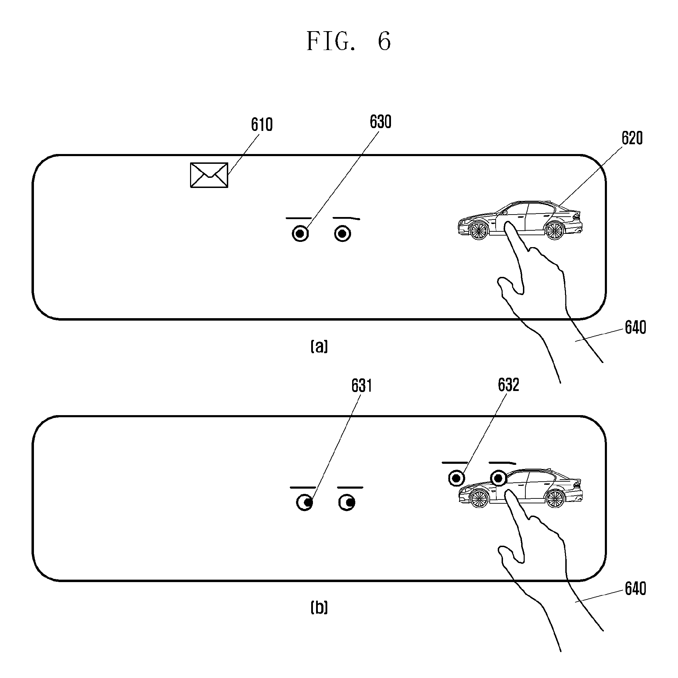

FIGs. 6(a) and 6(b) illustrates sub-regions in a gesture input area according to an embodiment of the present invention.

Referring to FIGs. 6(a) and 6(b), the electronic device according to an embodiment of the present invention may be a Head-Up Display (HUD) or an HMD. The electronic device displays an object 620 or a virtual object 610 on the display area. For example, the object 620 may be an actual object appearing in front of the user. When the electronic device obtains a user's gesture 640 as an input, the electronic device employs a user's viewing points, i.e., points of gaze 630, 631 and 632 to determine effectiveness of the gesture 640. The electronic device may set the display area or input area as the entire area of a user's view.

In an embodiment of the present invention, the user's gesture 640 is a motion pointing to the object 620 in order to execute a function associated with the object 620, such as a searching or a photographing funcation. The electronic device determines whether the pointing motion is a user's intended motion. To this end, the electronic device employs a user's viewing point. For example, as shown in FIG. 6(a), when the electronic device ascertains that the user's viewing point 630 is located in a sub-region unrelated to the object 620 and detects a gesture 640, the electronic device determines that the gesture 640 is a user's unintended motion. On the contrary, as shown in FIG. 6(b), when the electronic device ascertains that the user's viewing points 631 and 632 are located at an object 620 or in a sub-region related to the object 620/the virtual object 610 and detects a gesture 640, the electronic device determines that the gesture 640 is a user's intended motion and executes a function corresponding to the gesture 640.

In an embodiment of the present invention, the virtual object 610 may be an image to notify that a message has been arrived. When the electronic device ascertains that a viewing point is highly related to a sub-region that the gesture 640 is applied to, the electronic device provides a function for determining whether a message has arrived.

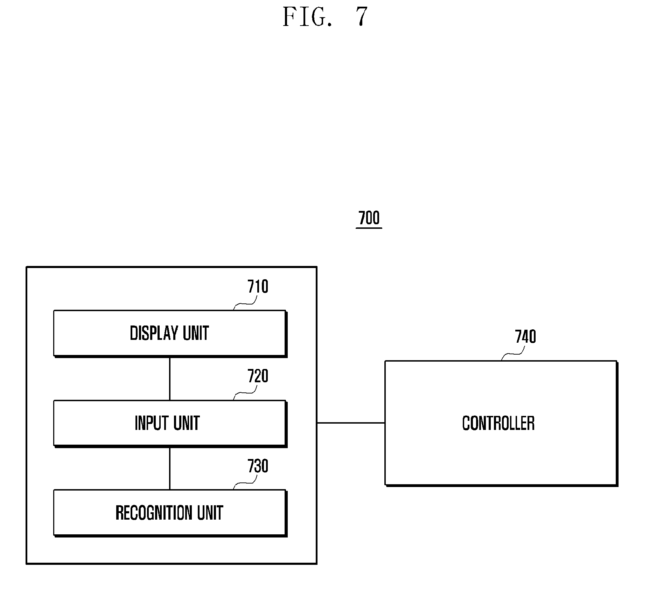

FIG. 7 illustrates a schematic block diagram of an electronic device 700 according to an embodiment of the present invention.

Referring to FIG. 7, the electronic device 700 includes a display unit 710, an input unit 720, a recognition unit 730 and a controller 740. The electronic device 700 may be included in the electronic device. The electronic devices described referring to FIGS. 1 to 5 include the components of the electronic device 700.

The display unit 710 includes a display functionally connected to the electronic device 700. The electronic device 700 displays information on the display unit 710. In an embodiment of the present invention, the electronic device 700 distinctively displays a display area including a viewing point. That is, when the display area is divided into a number of sub-areas, the display unit 710 displays a sub-area where a user's viewing point is located, distinctively differing from the other sub-areas where the user's viewing point is not located, thereby intuitively informing the user where his or her viewing point is located.

The display area refers to a screen area of the electronic device 700. In an embodiment of the present invention, the electronic device 700 is implemented to include a touch panel that integrates the display unit 710 and input unit 720. In an embodiment of the present invention, the display unit 710 includes a screen to which information from the electronic device 700 is projected. For example, the display unit 710 includes a screen such as on an HUD, or a space such as a hologram, to which a video of the electronic device 700 is projected.

The input unit 720 obtains inputs applied to the display unit 610. In an embodiment of the present invention, the input unit 720 includes at least one of a touch screen, a touch pad, a pen recognition pad, a motion sensor such as a sensor module including an infra-red sensor, a magnetic sensor, a camera, and hardware keys. An example of the inputs is a user's touches applied to the screen of the electronic device. The inputs may be created by part of the body, such as a hand foot or voice, or by objects such as a pen. The input unit 720 may acquire attributes of the obtained input, such as a position of an input, and information related to the input tool.

The recognition unit 730 may recognize a viewing point that a user is viewing on the display area such as a touch screen. The recognition unit 730 includes an infra-red sensor or a camera and thereby recognizes a viewing point. For example, the recognition unit 730 recognizes a viewing point by combining the direction of a user's eyes with the direction of the user's face. The recognition unit 730 recognizes at least one of the user's eyes, nose, mouth and ears, and recognizes the user's viewing point by combining positions of the recognized user's eyes, nose, mouth and ears with each other. The recognition unit 730 also recognizes an input of gesture by a sensor or a camera.

In an embodiment of the present invention, the controller 740 divides the display area into a number of window regions according to the attributes or number of the applications. The controller 740 includes hardware including at least one of a processor or memory (not shown). When the display area is divided into one or more sub-areas, the sub-areas are referred to as window regions. The window regions may be operated independently, individually, or in cooperation with each other. The number, location, shape and size of the window regions is variable.

The controller 740 sets a specified range according to attribute information of the input. That is, the controller 740 sets a specified range to different values according to attribute information of the input, such as a pen or the hand.

When the controller 740 ascertains that the input is included in the specified range, the controller 740 determines that the input is an effective input. The controller 740 adjusts the specified ranges in window regions, according to a period of time during which the viewing point is focused on, a time difference between periods of time during which a previous viewing point and a current viewing point are focused on, respectively, a period of time during which a continuous viewing point focus is made, an attribute of an application, and an attribute of an input, for example.

The controller 740 determines whether to execute a function corresponding to the input, based on the viewing point or the position of the input. When the controller 740 ascertains that the viewing point and the position of the input are in the same display area, the controller 740 executes a function corresponding to the input. For example, when the controller 740 ascertains that the viewing point is identical to the position of the input, the controller 740 determines that the input is an effective input and executes a function corresponding to the input. For example, when the controller 740 ascertains that the position of the input is included in a window region where the viewing point is recognized, the controller 740 executes a function corresponding to the input.

When the controller 740 ascertains that the viewing point and the position of the input are within a reference distance, the controller 740 executes a function corresponding to the input according to whether the attribute of the input is within a specified range. For example, if the viewing point and the position of the input are not in the same area but are within a reference distance, the controller 740 executes a function corresponding to the input according to the level of effectiveness of the input. The reference distance may be set according to a correlation between a viewing point and a position of an input, the screen size of the electronic device, and the size or number of display areas.

Similarly, when the controller 740 ascertains that the position of the input is included in a window region adjacent to a window region where the viewing point is recognized, the controller 740 executes a function corresponding to the input. That is, when the controller 740 ascertains that a user's viewing point is not in a window region but the attribute of the input is within a specified range, such as when the input has a relatively high level of effectiveness, the controller 740 executes a function corresponding to the input. The window region adjacent to a window region where the viewing point is recognized may be one of window regions located at the top, bottom, left and right of the window region where the viewing point is recognized.

Although the embodiment of the present invention shown in FIG. 7 is implemented in such a manner that the display unit 710, input unit 720, recognition unit 730 and controller 740 are separated from each other, the controller 740 may be modified in such a manner that part or all of the functions are included (or imbedded) in the controller 740 so that the controller 740 can perform a series of operations of functions of the components.

In an embodiment of the present invention, at least part of the functions of the controller 740 may be included in at least one of the display unit 710, input unit 720, recognition unit 730 or an additional component. Each of the display unit 710, input unit 720, recognition unit 730 and controller 740 may be implemented with software, firmware, hardware or a combination thereof. Although the display unit 710, input unit 720, recognition unit 730 and controller 740 are combined with other modules, these units may perform their functions before being combined. Although in the present invention the display unit 710, input unit 720, recognition unit 730 and controller 740 are separated from each other, the present invention may be modified in such a manner that part or all of their functions can be combined.

As described above, the method and apparatus according to embodiments of the present invention process inputs based on a viewing point of a user, thereby preventing unintended signals of unintended actions from being input, and thereby reducing input errors.

Although certain embodiments of the present invention have been described in detail above, it should be understood that many variations and modifications of the basic inventive concept herein described, which may be apparent to those skilled in the art, will still fall within the spirit and scope of the embodiments of the present invention as defined in the appended claims.

## Claims

1. A method for processing a user's inputs comprising:
recognizing a viewing point that a user is viewing on a display area functionally connected to an electronic device;
obtaining an input on the display area; and
determining whether to execute a function corresponding to the input, based on at least one of attributes of the input or the viewing point.

2. The method of claim 1, wherein the display area comprises a number of window regions based on at least one of a number of applications displayed on the display area and attributes of the applications displayed on the display area.

3. The method of claim 2, wherein determining whether to execute the function comprises:
executing, when a position of the input is included in a window region where the viewing point is recognized, a function corresponding to the input.

4. The method of claim 2, wherein determining whether to execute the function comprises:
executing, when a position of the input is included in a window region adjacent to an window region where the viewing point is recognized, a function corresponding to the input.

5. The method of claim 1, wherein determining whether to execute the function comprises:
setting a specified range to different values in display areas, according to the viewing point; and
executing, when the at least one attribute of the input is within the specified range, a function corresponding to the input.

6. The method of claim 1, wherein the at least one attribute comprises:
a variable or a rate of change in time of the variable,
wherein the variable comprises at least one of a contact area of the input, a position of input, a number of inputs, a period of time for input generation, a velocity of the input, a relationship between adjacent inputs that are successively created, and a path between inputs.

7. The method of claim 1, wherein the display area comprises:
a number of window regions that are divided according to at least one attribute of contents, applications, pop-ups, functional windows, and favorites.

8. The method of claim 7, further comprising:
adjusting specified ranges for window regions, according to a period of time during which the viewing point is focused on, a time difference between periods of time during which a previous viewing point and a current viewing point are focused on, respectively, a period of time during which a continuous viewing point is focused on, an attribute of the application, and an attribute of the input.

9. The method of claim 1, wherein recognizing the viewing point comprises:
recognizing the viewing point based on a direction in which the user's eyes are looking and/or a direction in which the user's face is facing.

10. An electronic device comprising:
a recognition unit configured to recognize a viewing point that a user is viewing on a display area functionally connected to an electronic device;
an input unit configured to obtain an input on the display area; and
a controller configured to determine whether to execute a function corresponding to the input, based on at least one of attributes of the input or the viewing point.

11. The electronic device of claim 10, wherein the controller further executes, when the viewing point corresponds to a position of the input, a function corresponding to the input.

12. The electronic device of claim 10, wherein the controller further executes, when the viewing point and a position of the input are within a reference distance, a function corresponding to the input according to whether the attributes of the input are within a specified range.

13. The electronic device of claim 10, wherein the controller further divides the display area into a number of window regions based on at least one of a number of applications displayed on the display area and attributes of applications displayed on the display area, and executes, when the position of the input is included in a window region where the viewing point is recognized, a function corresponding to the input.

14. The electronic device of claim 10, wherein the controller further sets a specific range to different values according to the attributes of the input, and executes, when the attributes of the input are within the specific range, a function corresponding to the input.

15. The electronic device of claim 10, wherein the controller further sets a specific range to different values in display areas, according to the viewing point, and executes, when the attributes of the input are within the specific range, a function corresponding to the input.
